## Europäisches Patentamt

## European Patent Office

## Office européen des brevets

(19)

(11) Veröffentlichungsnummer: **0 017 726**
**B1**

(12) **EUROPÄISCHE PATENTSCHRIFT**

(45) Veröffentlichungstag der Patentschrift:
04.05.83

(51) Int. Cl.³: **G 02 B 7/11, H 04 N 5/34**

(21) Anmeldenummer: **80100797.2**

(22) Anmeldetag: **18.02.80**

(54) **Verfahren und Einrichtung zur automatischen Scharfeinstellung eines Bildes.**

(30) Priorität: **20.03.79 DE 2910875**

(43) Veröffentlichungstag der Anmeldung:
**29.10.80 Patentblatt 80/22**

(45) Bekanntmachung des Hinweises auf die Patenterteilung:
**04.05.83 Patentblatt 83/18**

(84) Benannte Vertragsstaaten:
**AT BE CH FR GB**

(56) Entgegenhaltungen:
**DE-A-2 246 384**
**DE-A-2 518 746**
**DE-A-2 551 070**
**DE-A-2 812 593**
**FR-A-2 176 816**
**FR-A-2 396 325**
**FR-A-2 402 222**
**GB-A-2 000 655**
**US-A-3 621 136**
**US-A-3 728 482**

(73) Patentinhaber: **Kernforschungszentrum Karlsruhe GmbH, Weberstrasse 5, D-7500 Karlsruhe 1 (DE)**

(72) Erfinder: **Vollath, Dieter, Dr. Dipl.-Phys., Primelweg 3, D-7513 Stutensee (DE)**

BUNDESDRUCKEREI BERLIN

## Verfahren und Einrichtung zur automatischen Scharfeinstellung eines Bildes

Die Erfindung betrifft ein Verfahren zur automatischen Scharfeinstellung eines Bildes, wobei das Bild mittels eines Objektives erzeugt wird, und eine Einrichtung zur Ausführung des Verfahrens.

Bei der Herstellung und Beurteilung von mehrphasigen Werkstoffen, wie z. B. Kernbrennstofftabletten, die aus Mischungen von Urandioxid und Plutoniumdioxid, wie sie z. B. für Schnelle Brutreaktoren oder im Falle der Plutoniumrückführung für Leichtwasserreaktoren verwendet werden, wird je nach Herstellungsprozeß eine unterschiedliche Verteilung des Plutoniums erhalten. Die Plutoniumverteilung kann in dem Fall, in dem durch entsprechende Herstellung oder Behandlung des Ausgangspulvers eine weitgehende Mischkristallbildung nicht erzwungen wird, inhomogen werden. In diesem Fall ist es für den Hersteller interessant zu erfahren, wie das Plutonium verteilt ist, um daraus Rückschlüsse auf die Fertigung machen zu können. Der Brennstoffkunde auf der anderen Seite will wissen, ob das Plutonium in den Tabletten wirklich in der geforderten homogenen Verteilung vorliegt. Soll nun die Homogenität oder die Verteilung einer zweiten Phase charakterisiert werden, so wird im allgemeinen die Standardabweichung der Konzentration oder eines daraus abgeleiteten Verteilungsparameters als Meßzahl benutzt.

Soll bei der automatischen Bildanalyse mehr als eine Probenstelle untersucht werden, so ist es dann auch notwendig, die Probe zu verschieben. Dabei wird vorausgesetzt, daß die Probe ständig im gleichen Abstand vor der Objektivlinse eines Beobachtungsmikroskops oder einer TV-Kamera bleibt. Ist dies nicht sicher der Fall, so wird das Bild unscharf und damit das Meßergebnis falsch. Um dies zu verhindern, muß das Bild immer wieder scharf eingestellt werden.

Die Aufgabe, welche der Erfindung gestellt ist, besteht nunmehr darin, eine Methode zur automatischen Scharfeinstellung eines Mikroskopbildes unter Benutzung eines Bildanalysators sowie eine Einrichtung zur Durchführung des Verfahrens zu finden, welche es ermöglichen, die automatische Analyse von Proben auch dann ausführen zu können, wenn diese nicht völlig eben sind.

Die Lösung dieser Aufgabe besteht erfindungsgemäß in den Merkmalen, wie sie im Anspruch 1 aufgeführt sind. Die im Anspruch 2 aufgeführten Merkmale beziehen sich auf spezielle Weiterbildungen des erfindungsgemäßen Verfahrens, während die Merkmale des Anspruches 3 eine Einrichtung zur Durchführung der Verfahren beinhalten.

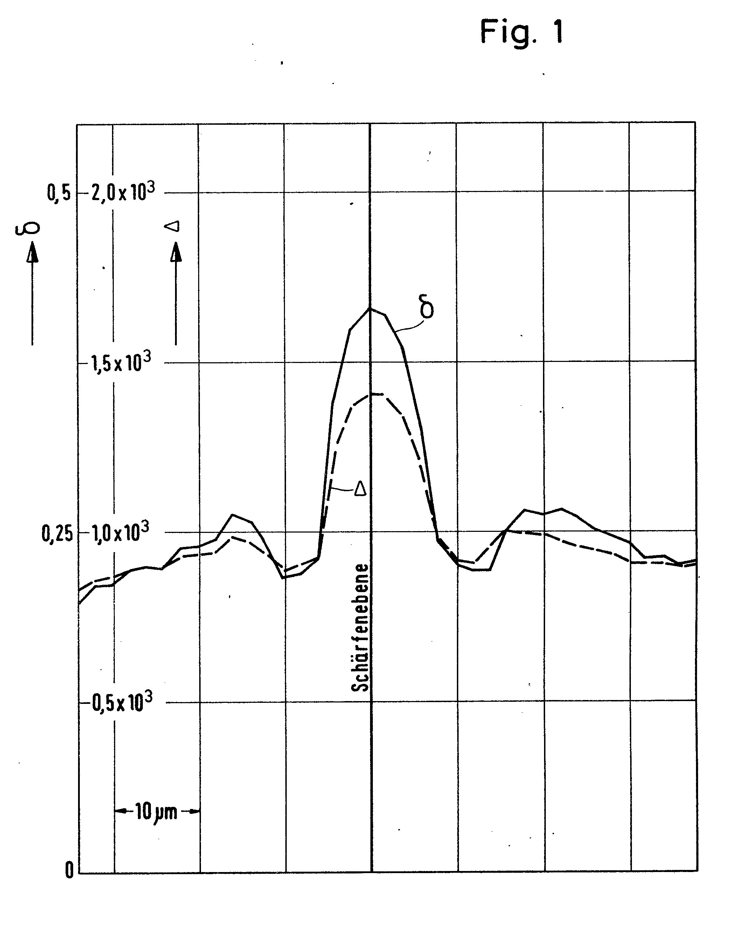

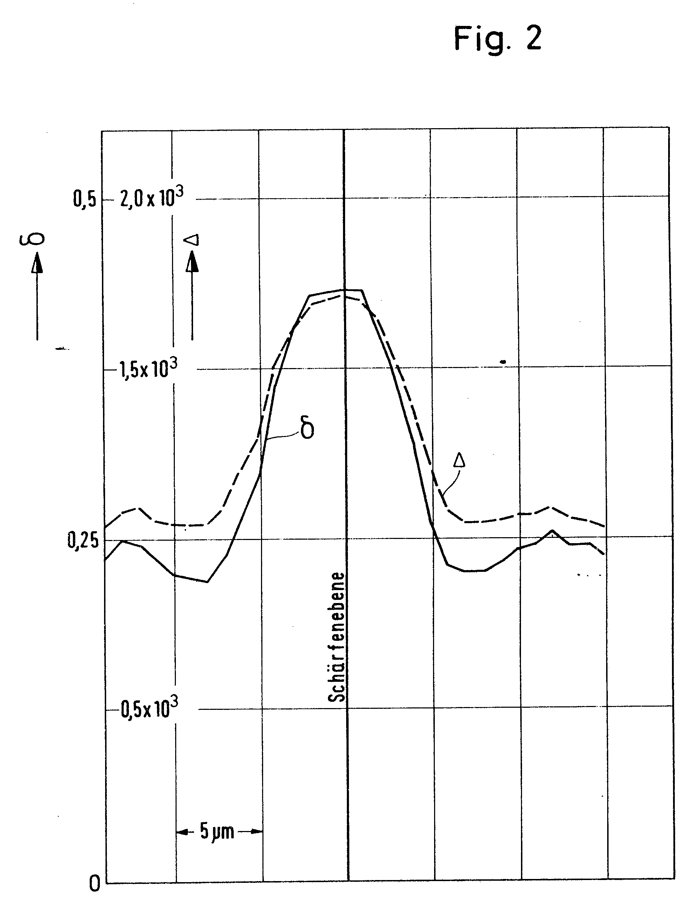

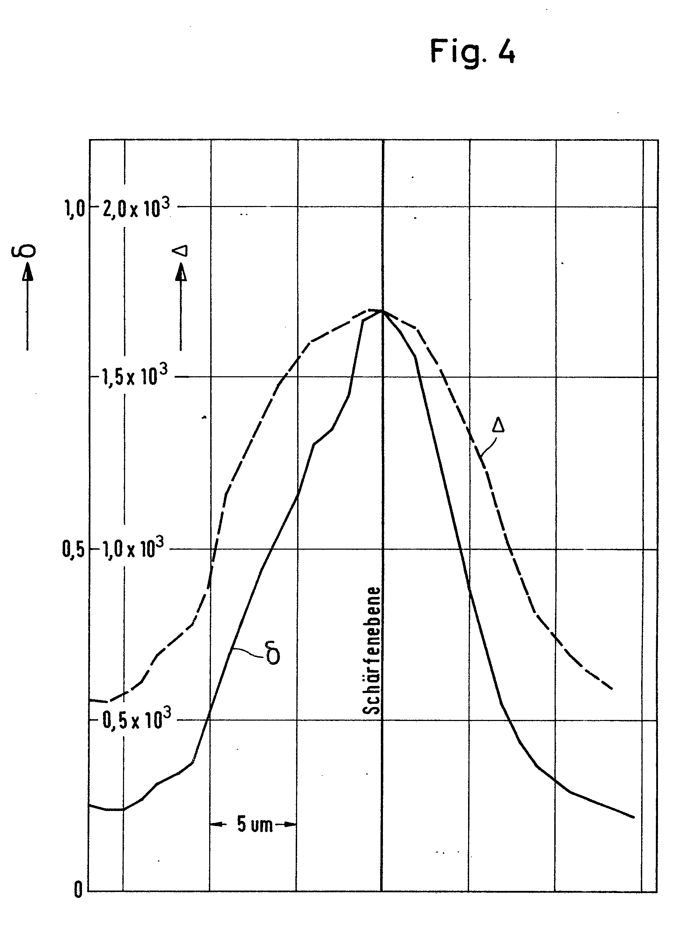

Die Erfindung wird im folgenden anhand von Ausführungsbeispielen mittels der Figuren 1 bis 7 und einer Tabelle näher erläutert.

Werden die Nachbarpunkte eines jeden Bildpunktes betrachtet, so ist die Differenz der Helligkeit zwischen je zwei benachbarten Bildpunkten dann am größten, wenn das Bild scharf eingestellt ist. Wird also die Autokorrelationsfunktion der Helligkeitsverteilung eines Bildes an einer Stelle (0,0) berechnet und dieser Funktionswert mit dem Mittelwert der Autokorrelationsfunktion des Bildes vergleichen, so muß nach dieser Überlegung die Differenz der beiden Funktionswerte beim scharf eingestellten Bild maximal sein.

Die Autokorrelationsfunktion $F(x,y)$ einer Helligkeitsverteilungsfunktion $f(u,v)$ ist definiert als

$$F(x,y) = \int_{-\infty}^{\infty} \int_{-\infty}^{\infty} f(u,v)\, f^+(u+x, v+y)\, du\, dv \qquad (1)$$

Dabei ist

(u,v) die Ebene des Bildes,

(x,y) die Ebene der Korrelationsfunktion.

Da die Funktion $f(u,v)$ mit Ausnahme des Bereiches der Ebene, in der das Gesichtsfeld des zur Beobachtung der Oberfläche der Tablette verwendeten Objektives zu liegen kommt, null ist und in diesem auch nicht divergiert, existiert das o. a. Integral für jeden experimentell möglichen Fall.

Wird angenommen, daß die Funktion $f(u,v)$ nur im Bereich $0 \leq u \leq a$ und $0 \leq v \leq b$ von Null verschieden und reell ist, vereinfacht sich das Integral (1) zu

$$F(x,y) = \int_{-a}^{a} \int_{-b}^{b} f(u,v)\, f(u+x, v+y)\, du\, dv. \qquad (2)$$

Man erhält also ein optimal scharfes Bild, wenn die Bedienung

$\Delta = F(0,0) - \overline{F(X,Y)} = $ Maximum erfüllt ist.

$F(X,Y) \ldots$ Wert der Autokorrelationsfunktion an der Stelle $(X,Y)$. $\qquad (3)$

Eine weitere Eigenschaft der Autokorrelationsfunktion ist, daß

$$F\;(0,0)\;=\;\sigma^2+\mu^2$$
$$\overline{F(X,Y)}\;=\;\mu^2$$

ist. Dabei ist

$$\varDelta = \sigma^2 \tag{4}$$

mit

$\sigma$ = Standardabweichung der Helligkeitsverteilung und

$\mu$ = Mittelwert der Helligkeit im Bild.

Das dargestellte Ergebnis ist auch durchaus anschaulich. Es besagt, daß die Standardabweichung der Helligkeit beim scharf eingestellten Bild maximal ist.

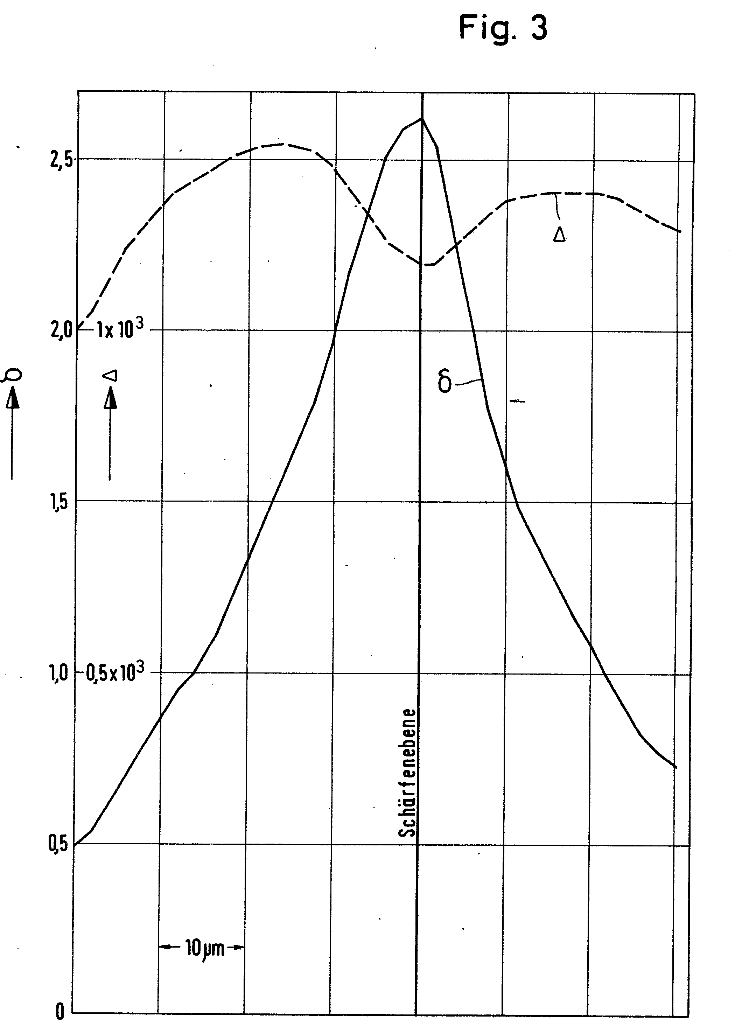

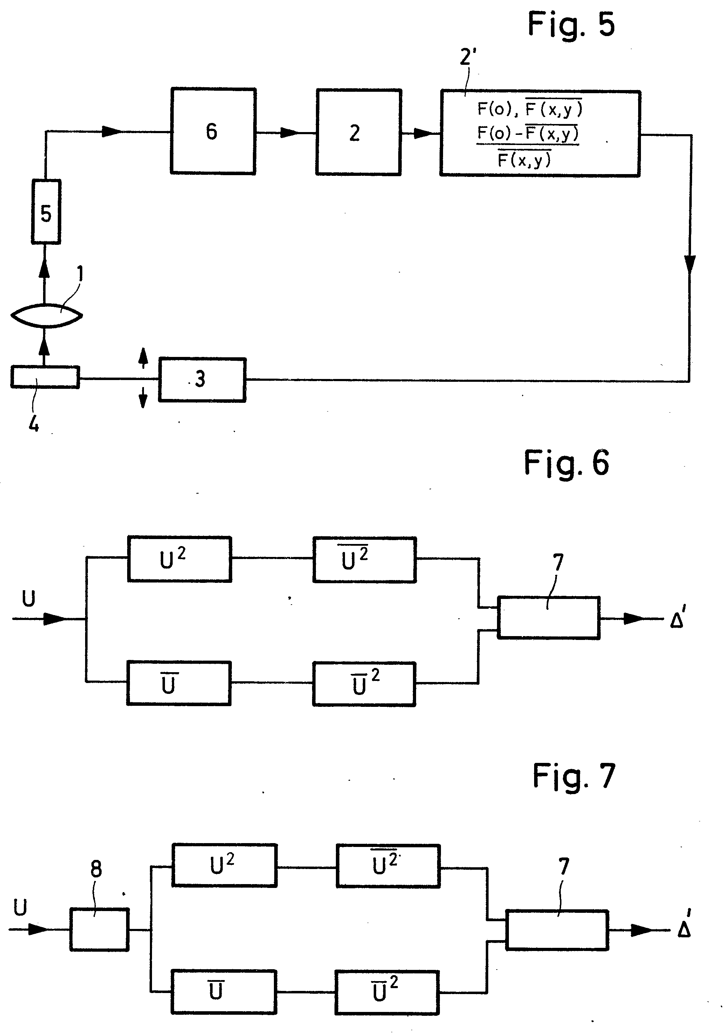

Die strichlierten Kurven in den Fig. 1, 2, 3 und 4 zeigen den Verlauf von $\varDelta$ als Funktion des Abstandes der Objektlage vor dem Objektiv 1 (s. Fig. 5). Die Messungen wurden an zwei Durchlichtobjektiven der Firma Leitz und zwei Auflichtobjektiven der Firma Reichert durchgeführt. Während die Größe $\varDelta$ in den Fig. 1, 2 und 4 tatsächlich ein Maximum aufweist, ist dies in Fig. 3 nicht zu beobachten. Es handelt sich dabei um einen Kurvenverlauf, der bei einer anderen Probe auch schon bei einem anderen Objektiv gefunden wurde. Der Verlauf dieser Kurven ist extrem stark vom Präparat (Objekt 4, s. Fig. 5) abhängig. Die Abweichung von dem theoretisch erwarteten Verlauf kommt dadurch zustande, daß sich mit geändertem Abstand Objektiv-Probe auch die Vergrößerung ändert. Damit ändert sich zwangsläufig auch der Bildinhalt. Dieses Problem kann umgangen werden, indem anstelle der Funktionen $\varDelta = \sigma^2$ die normierte Funktion

$$\sigma = \frac{\varDelta}{\mu^2} \;=\; \left(\frac{\sigma}{\mu}\right)^2 \tag{5}$$

verwendet wird.

In den Fig. 1, 2, 3 und 4 ist nun diese Funktion $\delta$ als voll ausgezogene Kurve eingezeichnet. Man erkennt, daß nun auch im Falle der Fig. 3 ein eindeutiges Maximum auftritt. Bei den in den Fig. 1, 2 und 4 gezeichneten Fällen ist das Maximum deutlicher ausgeprägt als das der Funktion $\varDelta$.

Die Funktion $\delta$ kann durch eine densitometrische Vermessung des Bildes (Objektoberfläche) bestimmt werden. Zur Realisierung einer automatischen Einrichtung (s. Fig. 5) zur Fokussierung eines Mikroskopes (Objektives 1) muß nur immer wieder das Maximum der Funktion $\delta$ aufgesucht werden. Dies kann durch die Kopplung eines Schrittmotors 3 am Schärfenantrieb eines Mikroskopes 1 (bzw. einer TV-Kamera 5) mit einem Prozeßrechner 2, 2' [PDP 11/03 zur Berechnung von Gleichung 5] technisch realisiert werden. Der Funktionsbereich einer solchen Einrichtung war bei allen geprüften Objektiven 1 größer als die zu erwartende Unebenheit der Proben 4.

Die Arbeitsbereiche einer automatischen Fokussiereinrichtung mit den dort angegebenen Objektiven sind in der folgenden Tabelle aufgezeigt.

| Objektiv 1 | Arbeitsbereich |
|---|---|
| LEITZ (Fig. 1) 16× | − 10 ... + 16 µm Abweichung aus der Schärfeebene |
| LEITZ (Fig. 2) 25× | − 8 ... + 8 µm Abweichung aus der Schärfeebene |
| REICHERT (Fig. 3) 16× | − 40 ... + 32 µm Abweichung aus der Schärfeebene |
| REICHERT (Fig. 4) 40× | − 15 ... + 13 µm Abweichung aus der Schärfeebene |

Das angegebene Verfahren zur Fokussierung kann nicht nur bei Bildanalysengeräten, sondern auch bei jeder Art von elektrischen Bildübertragungen, wie z. B. bei TV-Kameras 5 (s. Fig. 5) und Rasterelektronenmikroskopen verwendet werden. Es wird dabei die Relation (6) benutzt:

$$\varDelta = \frac{F\,(0)-\overline{F}}{\overline{F}} = \frac{\mu^2 + \sigma^2 - \mu^2}{\mu^2}, \tag{6}$$

3

wobei für jeden Bildpunkt eine elektrische Spannung U das Helligkeitssignal darstellt. Hieraus ergibt sich die Beziehung 7.

$$\Delta = \frac{\sum U^2 - (\sum U)^2}{(\sum U)^2} = \frac{\overline{U^2}}{\overline{U}^2} - 1 . \tag{7}$$

Da die Größe 1 nur eine konstante Verschiebung darstellt, kann sie weggelassen werden. Es gilt also vereinfacht die Gleichung 8:

$$\Delta' = \frac{\overline{U^2}}{\overline{U}^2} . \tag{8}$$

Diese Gleichung kann auf zwei Arten realisiert werden. In Fig. 6 ist die analoge Verarbeitung gezeigt, wobei von der Spannung sowohl $U^2$ und $\overline{U^2}$, als auch $\overline{U}$ und $\overline{U}^2$ gebildet und dann mittels eines Dividierers 7 der Quotient (8) erhalten wird. Die Fig. 7 zeigt die digitale Verarbeitung, wobei zuerst mit einem ADC 8 umgesetzt und dann multipliziert und addiert bzw. umgekehrt wird, wonach erst der Quotient beider Ausdrücke gemäß Gleichung (8) im Dividierer 8 gebildet wird.

Anschließend muß mit dem Schrittmotor 3 (s. Fig. 5) und einer nicht näher dargestellten Peaksucheinrichtung das Maximum von $\Delta'$ (Gleichung 8) aufgesucht werden.

**Patentansprüche**

1. Verfahren zur automatischen Scharfeinstellung eines durch ein Objektiv erzeugten Bildes, dadurch gekennzeichnet, daß der Wert der Autokorrelationsfunktion der Helligkeitsverteilung des Bildes an einer bestimmten Stelle bestimmt und davon der Mittelwert der Autokorrelationsfunktion über das gesamte Bild abgezogen wird, daß diese Differenz durch den genannten Mittelwert der Autokorrelationsfunktion dividiert und daraus ein Steuersignal gebildet wird, das die Schärfeneinstellung des Bildes schrittweise verändert, bis der Wert der das Steuersignal bestimmenden Funktion sein Maximum erreicht hat.

2. Verfahren nach Anspruch 1, dadurch gekennzeichnet, daß für jeden Bildpunkt ein Signal in Form einer die Helligkeit darstellenden elektrischen Spannung ermittelt wird.

3. Einrichtung zur Ausführung des Verfahrens nach Anspruch 1 und 2, gekennzeichnet durch einen Rechner (22'), der die Helligkeitssignale zum genannten Steuersignal verarbeitet und dieses an einen Schrittmotor (3) abgibt, welcher das Objekt (4) bezüglich des Objektives (1) verstellt.

**Claims**

1. Technique for automatic focusing of an image generated by a lens, with the value of the autocorrelation function of the brightness distribution of the image determined at a given spot and the value of the autocorrelation function averaged over the whole image deduced from it, with this difference divided by the said average value of the autocorrelation function and a control signal generated from it which varies stepwise the focusing of the image until the value of the function determining the control signal has attained its maximum.

2. Technique as claimed in 1 with a signal as an electric voltage constituting the brightness determined for each image point.

3. System for execution of the technique as claimed in 1 and 2, with a computer (2.2) processing the brightness signals into the said control signal and transmitting it to a step motor (3) which adjusts the object (4) with respect to the lens (1).

**Revendications**

1. Procédé pour la mise au point précise automatique d'une image produite par un objectif optique, caractérisé en ce qu'on détermine la valeur de la fonction d'auto-corrélation de la répartition de clarté de l'image en un emplacement déterminé, et on en déduit la valeur moyenne de la fonction d'auto-corrélation sur la totalité de l'image, cette différence étant divisée par la valeur moyenne mentionnée de la fonction de corrélation pour former ainsi un signal de commande qui modifie pas à pas la précision de la mise au point de l'image, jusqu'à ce que la fonction déterminante du signal de commande atteigne sa valeur maximale.

**0 017 726**

2. Procédé suivant la revendication 1, caractérisé en ce qu'on produit, pour chaque point de l'image, un signal sous la forme d'une tension électrique représentant la clarté en ce point.

3. Installation pour l'application du procédé suivant l'une des revendications 1 et 2, caractérisé par une calculatrice (2, 2') qui traite les signaux de clarté pour fournir le signal de commande qui est appliqué à un moteur pas à pas (3) lequel déplace l'objet (4) par rapport à l'objectif (1).

## Fig. 1

# Fig. 2

Fig. 3

0 017 726

# Fig. 4

## Fig. 5

Blocks: 6, 2, 2'

$$\frac{F(o), \overline{F(x,y)}}{F(o) - \overline{F(x,y)}}$$
$$\overline{F(x,y)}$$

5, 1, 4, 3

## Fig. 6

$U \longrightarrow$

$U^2 \longrightarrow \overline{U^2}$

$\overline{U} \longrightarrow \overline{U}^2$

7 $\longrightarrow \Delta'$

## Fig. 7

$U \longrightarrow$ 8

$U^2 \longrightarrow \overline{U^2}$

$\overline{U} \longrightarrow \overline{U}^2$

7 $\longrightarrow \Delta'$